# EUROPÄISCHE PATENTSCHRIFT

(11) **EP 1 120 443 B1**
(45) Veröffentlichungstag und Bekanntmachung des Hinweises auf die Patenterteilung: **11.05.2005**
(21) Anmeldenummer: 00126328.4
(22) Anmeldetag: 01.12.2000
(51) Int. Cl.: C08L 77/00, C08L 77/02, C08L 77/06

(54) **Leichtfliessende transparente Polyamid-Formmasse**
Low-viscosity transparent polyamide moulding
Composition de polyamide transparente de faible viscosité

(30) Priorität: 25.01.2000 DE 10002948
(43) Veröffentlichungstag der Anmeldung: 01.08.2001
(73) Patentinhaber: Degussa AG, 40474 Düsseldorf (DE)
(72) Erfinder: Häger, Harald, Dr., 45772 Marl (DE); Hauck, Hans-Peter, Dr, 45657 Recklinghausen (DE); Richter, Ralf, Dr., 45657 Recklinghausen (DE); Maul, Jürgen, Dr., 45772 Marl (DE); Oenbrink, Georg, Dr., 48249 Dülmen (DE)

(56) Entgegenhaltungen:
- DE-A- 3 728 334
- US-A- 3 442 975

## Beschreibung

Gegenstand der Erfindung sind leichtfließende transparente Polyamid-Formmassen mit weitgehend unbeeinträchtigten mechanischen Eigenschaften.

Transparente Copolyamide zeichnen sich gegenüber anderen Werkstoffen allgemein durch eine gute Kälteschlagzähigkeit und gute Chemikalienbeständigkeit aus; sie besitzen darüber hinaus eine hohe Lichtdurchlässigkeit verbunden mit einer amorphen Struktur, die ein günstiges Schwindungsverhalten bewirkt. Aus diesem Werkstoff können Formteile auf hohem technischen Niveau hergestellt werden. Nachteilig ist allerdings die hohe Schmelzeviskosität, die eine Verarbeitung erheblich erschwert. Dünnwandige Spritzgußartikel können aus transparenten Copolyamiden nur schwierig hergestellt werden.

Üblicherweise können Kunststoffe leichtfließender eingestellt werden, indem das zahlenmittlere Molekulargewicht abgesenkt wird. Dies führt aber im Allgemeinen auch zu einer deutlichen Verschlechterung der mechanischen Eigenschaften. Bei Polyamiden wird gerade die Schlagzähigkeit durch ein Absenken des zahlenmittleren Molekulargewichts unter einen bestimmten Wert drastisch verringert.

Eine andere Möglichkeit, das Fließverhalten von Kunststoffen zu verbessern, besteht im Zusatz sogenannter Fließverbesserer. Dazu werden häufig niedermolekulare Additive eingesetzt. Im Falle transparenter Kunststoffe führen derartige Additive aber häufig zu einem Verlust der Transparenz oder bei der Verarbeitung zu Ablagerungen im Werkzeug.

In der CA-A 2 039 136 werden amorphe Polyamide beschrieben mit einem verbesserten Fließverhalten, welches durch den Zusatz bestimmter Ruße erhalten wird. Die DE-A 37 28 334 beschreibt die Fließverbesserung von amorphen Polyamiden durch den Zusatz von Polyolefinen, die mit Maleinsäureanhydrid gepfropft sind. A. Siegmann et al. (Polymer, 1985, 26(9), 1325-1330) konnten die Schmelzeviskosität von amorphen Polyamiden durch den Zusatz von flüssigkristallinen Polyestern verringern. In allen diesen Fällen geht jedoch die Transparenz der amorphen Polyamide verloren.

C. F. Frihart et al. (Plast. Copd. 1990, 13(3), 109-110) konnte die Schmelzeviskosität eines amorphen Polyamids dadurch verringern, daß er diesem mindestens 1 Gew.-% eines weiteren amorphen Polyamids basierend auf Dimerfettsäure (C₃₆-Dicarbonsäure) zusetzte. Diese Vorgehensweise führt aber gleichzeitig zu einer deutlichen Verringerung des E-Moduls.

In der US-A-3 442 975 wird beschrieben, daß ein Polyethylenimin-PA6-Pfropfcopolymer als Fließhilfsmittel für PA6 verwendet werden kann. Hier handelt es sich jedoch um ein kristallines, opakes Polyamid; auch die Mischung der beiden Komponenten ist opak.

Die Aufgabe der vorliegenden Erfindung bestand in der Entwicklung leichtfließender transparenter Polyamid-Formmassen, die die obengenannten Nachteile des Standes der Technik nicht aufweisen und deren mechanische Eigenschaften, insbesondere die Zugfestigkeit, der E-Modul, die Biegefestigkeit und die Schlagzähigkeit, möglichst wenig beeinträchtigt sind.

Diese Aufgabe wird durch eine Formmasse gelöst, die folgende Komponenten enthält:
I. 50 bis 99 Gew.-Teile, bevorzugt 75 bis 98 Gew.-Teile und besonders bevorzugt 85 bis 97 Gew.-Teile eines transparenten Polyamids sowie
II. 1 bis 50 Gew.-Teile, bevorzugt 2 bis 25 Gew.-Teile und besonders bevorzugt 3 bis 15 Gew.-Teile eines Pfropfcopolymeren,
   das unter Verwendung folgender Monomere hergestellt wird:
   a) 0,5 bis 25 Gew.-%, bevorzugt 1 bis 20 Gew.-% und besonders bevorzugt 1,5 bis 16 Gew.-%, bezogen auf das Pfropfcopolymer, eines verzweigten Polyamins mit mindestens 4, bevorzugt mindestens 8 und besonders bevorzugt mindestens 11 Stickstoffatomen und einem zahlenmittleren Molekulargewicht Mₙ von mindestens 146 g/mol und bevorzugt von mindestens 500 g/mol sowie
   b) polyamidbildende Monomere, ausgewählt aus Lactamen, ω-Aminocarbonsäuren und/oder äquivalenten Kombinationen von Diamin und Dicarbonsäure,
wobei die Summe der Gew.-Teile von I. und II. 100 ergibt.

Transparente Polyamide sind bekannt (Kunststoffhandbuch 3/4, Hrsg. G. W. Becker und G. Braun, S. 803ff, Carl Hanser Verlag München, Wien, 1998). Im Sinne der Erfindung geeignete transparente Polyamide sind zum Beispiel auch in folgenden Schriften beschrieben: US-A-2 742 496, CH-B-480 381, CH-B-679 861, DE-A-22 25 938, DE-A- 26 42 244, DE-A-27 43 515, DE-A- 29 36 759, DE-A- 27 32 928, DE-A- 43 10 970, EP-A-0 053 876, EP-A- 0 271 308, EP-A-0 313 436, EP-A-0 725 100 und EP-A-0 725 101.

Die erfindungsgemäß verwendeten transparenten Polyamide, die auch in Form von Copolyamiden vorliegen können, werden beispielsweise aus folgenden Monomeren hergestellt:
- verzweigte oder unverzweigte aliphatische Diamine mit 6 bis 14 C-Atomen wie z. B. 1.6-Hexamethylendiamin, 2-Methyl-1.5-diaminopentan, 2.2.4-bzw. 2.4.4-Trimethylhexamethylendiamin, 1.9-Nonamethylendiamin, 1.10-Decamethylendiamin oder 1.12-Dodecamethylendiamin;
- cycloaliphatische Diamine mit 6 bis 22 C-Atomen wie z. B. 4.4'-Diaminodicyclohexylmethan, 3.3'-Dimethyl-4.4'-diaminodicyclohexylmethan, 4.4'-Diaminodicyclohexylpropan, 1.4-Diaminocyclohexan, 1.4-Bis(aminomethyl)-cyclohexan, 2.6-Bis(aminomethyl)-norbornan oder 3-Aminomethyl-3.5.5-trimethylcyclohexylamin;
- araliphatische Diamine mit 8 bis 22 C-Atomen wie z. B. m- oder p-Xylylendiamin oder Bis(4-aminophenyl)propan;
- verzweigte oder unverzweigte aliphatische Dicarbonsäuren mit 6 bis 22 C-Atomen wie z. B. Adipinsäure, 2.2.4- bzw. 2.4.4-Trimethyladipinsäure, Azelainsäure, Sebacinsäure oder 1.12-Dodecandisäure;
- -cycloaliphatische Dicarbonsäuren mit 6 bis 22 C-Atomen wie z. B. Cyclohexan-1.4-dicarbonsäure, 4.4'-Dicarboxyldicyclohexylmethan, 3.3'-Dimethyl-4.4'-dicarboxyldicyclohexylmethan, 4.4'-Dicarboxyldicyclohexylpropan und 1.4-Bis(carboxymethyl)cyclohexan;
- -araliphatische Dicarbonsäuren mit 8 bis 22 C-Atomen wie z. B. 4.4'-Diphenylmethandicarbonsäure;
- aromatische Dicarbonsäuren mit 8 bis 22 C-Atomen wie z. B. Isophthalsäure, Tributylisophthalsäure, Terephthalsäure, 1.4-, 1.5-, 2.6-bzw. 2.7-Naphthalindicarbonsäure, Diphensäure oder Diphenylether-4.4'dicarbonsäure;
- Lactame mit 6 bis 12 C-Atomen bzw. die entsprechenden ω-Aminocarbonsäuren wie z. B. ε-Caprolactam, ε-Aminocapronsäure, Capryllactam, ω-Aminocaprylsäure, ω-Aminoundecansäure, Laurinlactam oder ω-Aminododecansäure.

Beispiele für erfindungsgemäß verwendbare transparente Polyamide sind:
- das Polyamid aus Terephthalsäure und dem Isomerengemisch aus 2.2.4- und 2.4.4-Trimethylhexamethylendiamin,
- das Polyamid aus Isophthalsäure und 1.6-Hexamethylendiamin,
- das Copolyamid aus einem Gemisch aus Terephthalsäure/Isophthalsäure und 1.6-Hexamethylendiamin,
- das Copolyamid aus Isophthalsäure, 3.3'-Dimethyl-4.4'diaminodicyclohexylmethan und Laurinlactam oder Caprolactam,
- das (Co)Polyamid aus 1.12-Dodecandisäure, 3.3'-Dimethyl-4.4'diaminodicyclohexylmethan und gegebenenfalls Laurinlactam oder Caprolactam,
- das Copolyamid aus Isophthalsäure, 4.4'-Diaminodicyclohexylmethan und Laurinlactam oder Caprolactam,
- das Polyamid aus 1.12-Dodecandisäure und 4.4'-Diaminodicyclohexylmethan,
- das Copolyamid aus einem Terephthalsäure/Isophthalsäure-Gemisch, 3.3'-Dimethyl-4.4'-diaminodicyclohexylmethan und Laurinlactam.

Als verzweigtes Polyamin können beispielsweise folgende Substanzklassen verwendet werden:
- Dendrimere wie beispielsweise

   ((H₂N-(CH₂)₃)₂N-(CH₂)₃)₂-N(CH₂)₂-N((CH₂)₂-N((CH₂)₃-NH₂)₂)₂

   (DE-A-196 54 179),
   Tris(2-aminoethyl)amin, N,N-Bis(2-aminoethyl)-N',N'-bis[2-[bis(2-aminoethyl)amino]ethyl]-1,2-ethandiamin,
   3,15-Bis(2-aminoethyl)-6,12-bis[2-[bis(2-aminoethyl)amino]ethyl]-9-[2-[bis[2-bis(2-aminoethyl)amino]ethyl]amino]ethyl]3,6,9,12,15-pentaazaheptadecan-1,17-diamin (J. M. Warakomski, Chem. Mat. 1992, 4, 1000 - 1004);
- verzweigte Polyethylenimine, die durch Polymerisation von Aziridinen erhältlich sind (Houben-Weyl, Methoden der Organischen Chemie, Band E20, Seiten 1482 - 1487, Georg Thieme Verlag Stuttgart, 1987) und die in der Regel folgende Aminogruppenverteilung besitzen:
   25 bis 46 % primäre Aminogruppen,
   30 bis 45 % sekundäre Aminogruppen und
   16 bis 40 % tertiäre Aminogruppen.

Das Polyamin besitzt im bevorzugten Fall ein zahlenmittleres Molekulargewicht Mₙ von maximal 20 000 g/mol, besonders bevorzugt von maximal 10 000 g/mol und insbesondere bevorzugt von maximal 5 000 g/mol.

Als polyamidbildende Monomere können alle diejenigen Monomere eingesetzt werden, die oben für das transparente Polyamid genannt sind, insbesondere Lactame und/oder ω-Aminocarbonsäuren. Besonders bevorzugt werden ε-Caprolactam, ω-Aminoundecansäure und/oder Laurinlactam verwendet, letzteres in erster Linie dann, wenn das transparente Polyamid einen substantiellen Laurinlactamanteil einpolymerisiert enthält. Es kann aber auch eine äquivalente Kombination von Diamin und Dicarbonsäure eingesetzt werden, gegebenenfalls zusammen mit einem Lactam und/oder einer ω-Aminocarbonsäure.

In einer möglichen Ausführungsform wird das Pfropfcopolymer zusätzlich unter Verwendung einer Oligocarbonsäure hergestellt, die ausgewählt ist aus 0,015 bis etwa 3 Mol-% Dicarbonsäure und 0,01 bis etwa 1,2 Mol-% Tricarbonsäure, jeweils bezogen auf die Summe der übrigen polyamidbildenden Monomere. Bei dieser Bezugnahme wird bei der äquivalenten Kombination von Diamin und Dicarbonsäure jedes dieser Monomere einzeln betrachtet. Auf diese Weise besitzen die polyamidbildenden Monomere insgesamt einen leichten Überschuß an Carboxylgruppen. Wird eine Dicarbonsäure verwendet, setzt man bevorzugt 0,03 bis 2,2 Mol-%, besonders bevorzugt 0,05 bis 1,5 Mol-%, ganz besonders bevorzugt 0,1 bis 1 Mol-% und insbesondere 0,15 bis 0,65 Mol-% zu; verwendet man eine Tricarbonsäure, so nimmt man vorzugsweise 0,02 bis 0,9 Mol-%, besonders bevorzugt 0,025 bis 0,6 Mol-%, ganz besonders bevorzugt 0,03 bis 0,4 Mol-% und insbesondere 0,04 bis 0,25 Mol-%. Durch die Mitverwendung der Oligocarbonsäure wird die Lösemittel- und Hydrolysebeständigkeit des Pfropfcopolymers signifikant verbessert.

Als Oligocarbonsäure kann jede beliebige Di- oder Tricarbonsäure mit 6 bis 24 C-Atomen eingesetzt werden, beispielsweise Adipinsäure, Korksäure, Azelainsäure, Sebacinsäure, Dodecandisäure, Isophthalsäure, 2,6-Naphthalindicarbonsäure, Cyclohexan-1.4-dicarbonsäure, Trimesinsäure und/oder Trimellitsäure.

Zusätzlich können, falls gewünscht, aliphatische, alicyclische, aromatische, aralkylische und/oder alkylarylsubstituierte Monocarbonsäuren mit 3 bis 50 Kohlenstoffatomen wie z. B. Laurylsäure, ungesättigte Fettsäuren, Acrylsäure oder Benzoesäure als Regler eingesetzt werden. Mit diesen Reglern kann die Konzentration an Aminogruppen verringert werden, ohne die Molekülgestalt zu verändern.

Die erfindungsgemäßen Pfropfcopolymere können nach verschiedenen Verfahren hergestellt werden.

Eine Möglichkeit besteht darin, Lactam bzw. ω-Aminocarbonsäure und Polyamin zusammen vorzugeben und die Polymerisation bzw. die Polykondensation durchzuführen. Die Oligocarbonsäure kann entweder am Anfang oder im Verlauf der Reaktion zugegeben werden.

Ein bevorzugtes Verfahren besteht jedoch darin, daß in einem zweistufigen Prozeß zuerst die Lactamspaltung und Präpolymerisation in Gegenwart von Wasser durchgeführt wird (alternativ werden die entsprechenden ω-Aminocarbonsäuren bzw. Diamine und Dicarbonsäuren direkt eingesetzt und präpolymerisiert); im zweiten Schritt wird das Polyamin zugegeben, während die gegebenenfalls mitverwendete Oligocarbonsäure vor, während oder nach der Präpolymerisation zudosiert wird. Dann wird bei Temperaturen zwischen 200 und 290 °C entspannt und im Stickstoffstrom oder im Vakuum polykondensiert.

Ein weiteres bevorzugtes Verfahren besteht im hydrolytischen Abbau eines Polyamids zu einem Präpolymer und gleichzeitige oder anschließende Reaktion mit dem Polyamin. Vorzugsweise werden Polyamide verwendet, bei denen die Endgruppendifferenz näherungsweise Null beträgt, oder bei denen die gegebenenfalls mitverwendete Oligocarbonsäure bereits einpolykondensiert ist. Die Oligocarbonsäure kann aber auch zu Anfang oder im Laufe der Abbaureaktion zugegeben werden.

Mit diesen Verfahren lassen sich ultrahochverzweigte Polyamide mit Säurezahlen kleiner als 40 mmol/kg, bevorzugt kleiner als 20 mmol/kg und besonders bevorzugt kleiner als 10 mmol/kg herstellen. Schon nach ein- bis fünfstündiger Reaktionszeit bei Temperaturen von 200 °C bis 290 °C wird ein annähernd vollständiger Umsatz erzielt.

Falls gewünscht, kann in einem weiteren Verfahrensschritt eine mehrstündige Vakuumphase angeschlossen werden. Diese dauert mindestens vier Stunden, bevorzugt mindestens sechs Stunden und besonders bevorzugt mindestens acht Stunden bei 200 bis 290 °C. Nach einer Induktionsperiode von mehreren Stunden wird dann eine Erhöhung der Schmelzeviskosität beobachtet, was darauf zurückzufüwen sein dürfte, daß eine Reaktion von Aminoendgruppen miteinander unter Ammoniakabspaltung und Kettenverknüpfung stattfindet.

Falls man die Reaktion nicht in der Schmelze zu Ende führen will, kann das Pfropfcopolymer gemäß dem für Polyamide geltenden Stand der Technik auch in fester Phase nachkondensiert werden.

Das transparente Polyamid und das Pfropfcopolymere können nach allen Methoden des Standes der Technik miteinander gemischt werden. Vorzugsweise mischt man in einem knetenden Aggregat in der Schmelze.

Die erfindungsgemäße Formmasse kann die für transparente Polyamide üblichen Hilfs- und Zusatzstoffe enthalten wie z. B. Flammschutzmittel, Stabilisatoren, Weichmacher, Glasfasern oder andere Polymere, die die Transparenz nicht beeinträchtigen. Die Menge aller Zusatzstoffe beträgt insgesamt maximal 40 Gew.-Teile, bevorzugt maximal 30 Gew.-Teile und besonders bevorzugt maximal 20 Gew.-Teile.

Aus der Formmasse können Formteile nach allen Methoden des Standes der Technik hergestellt werden, beispielsweise durch Extrusion, Blasformen, Tiefziehen und insbesondere Spritzgießen. Entsprechende Formteile sind ebenfalls Gegenstand der Erfindung. Weiterhin eignet sich die erfindungsgemäße Formmasse hervorragend zur Extrusionsbeschichtung beliebiger Oberflächen.

Im Folgenden soll die Erfindung beispielhaft erläutert werden.

### Beispiel 1 (Herstellung eines Polyethylenimin-PA6-Pfropfcopolymeren)

56,58 kg ε-Caprolactam und 0.094 kg Dodecandisäure wurden in einem Aufheizkessel bei 180 bis 210 °C aufgeschmolzen und in einen druckfesten Polykondensationskessel dosiert. Dann wurden 5 Gew.-% Wasser und 57 ppm H₃PO₂ zugegeben. Darauf wurde auf einen Restwasserdampfdruck von 3 bar innerhalb von 3 h entspannt und 5 Gew.-% Polyethylenimin (Lupasol G100, BASF AG, Ludwigshafen) zudosiert. Das Polyethylenimin wurde bei dem sich einstellenden Eigendruck eingearbeitet. Anschließend wurde auf Normaldruck entspannt und die Reaktion unter Überleiten von Stickstoff innerhalb von 5 h bei 280 °C zu Ende geführt. Die klare Schmelze wurde über eine Spinnradpumpe als Strang ausgetragen, im Wasserbad abgekühlt und anschließend granuliert.
ηᵣₑₗ : 1,23
Schmelztemperatur Tₘ: 209 °C
Die Granalien waren opak.

### Beispiel 2:

95 Gew.-Teile eines transparenten Polyamids aus 50 Mol-% Terephthalsäure und 50 Mol-% eines Isomerengemisches aus 2.2.4- und 2.4.4-Trimethylhexamethylendiamin wurden mit 5 Gew.-Teilen des im Beispiel 1 hergestellten Pfropfcopolymeren in der Schmelze gemischt, wobei die Massetemperatur innerhalb des Bereichs von 280 °C bis 320 °C gehalten wurde. Das Produkt wurde als Strang extrudiert und granuliert; aus dem Granulat wurden durch Spritzgießen transparente Normprüfkörper hergestellt. Die Untersuchungsergebnisse sind in der Tabelle 1 wiedergegeben; zum Vergleich enthält die Tabelle auch die entsprechenden Daten für das eingesetzte Polyamid.

### Beispiel 3:

Wie Beispiel 2, aber mit 90 Gew.-Teilen des Polyamids und 10 Gew.-Teilen des Pfropfcopolymers. Auch hier wurden transparente Prüfkörper erhalten.

Die Tabelle 1 zeigt, daß die mechanischen Eigenschaften der erfindungsgemäßen Formmassen auf demselben Niveau wie die des unmodifizierten Polyamids liegen.

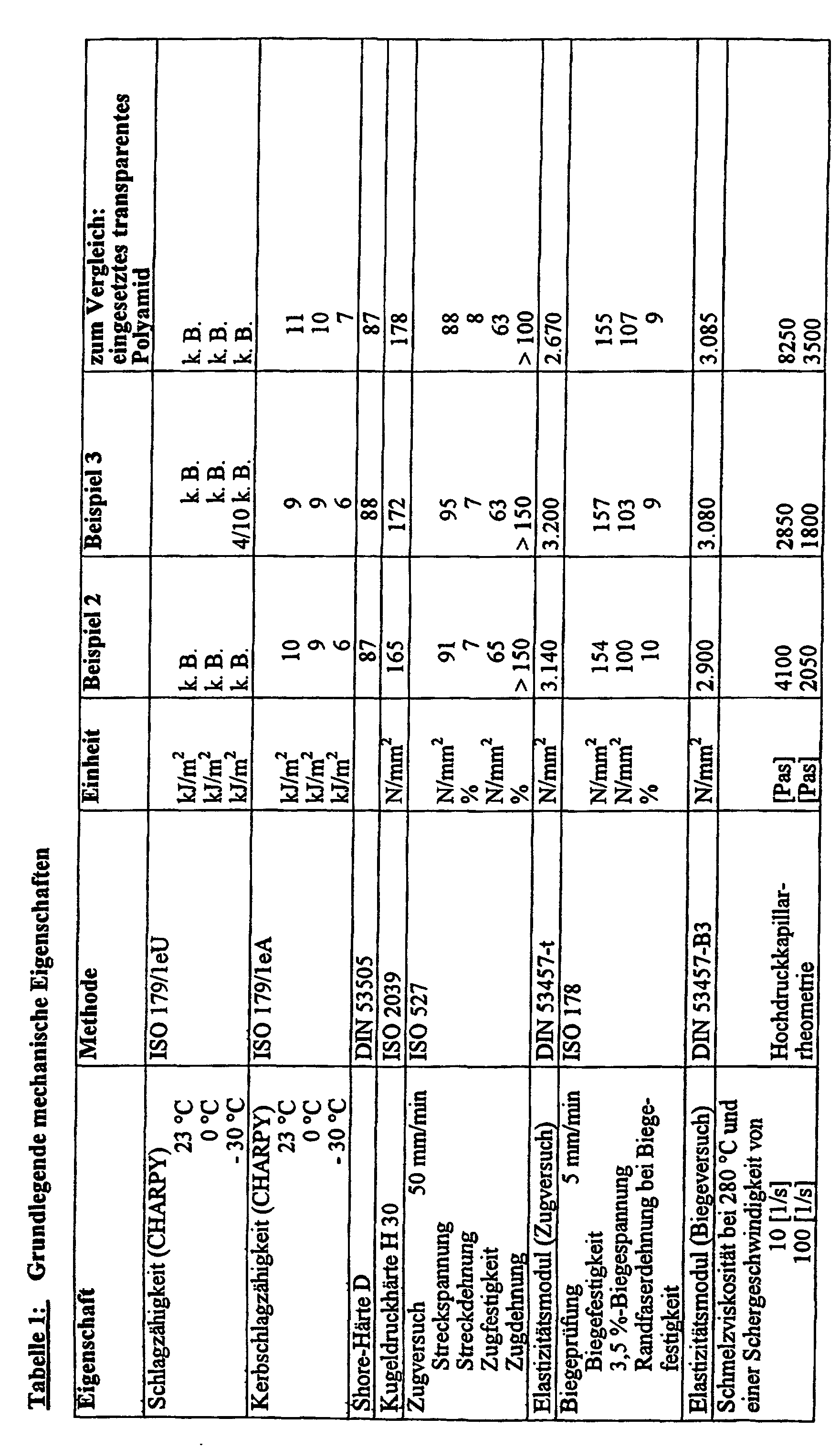

## Patentansprüche

1. Formmasse, die folgende Komponenten enthält:
I. 50 bis 99 Gew.-Teile eines transparenten Polyamids sowie
II. 1 bis 50 Gew.-Teile eines Pfropfcopolymeren, das unter Verwendung folgender Monomere hergestellt wird:
a) 0,5 bis 25 Gew.-%, bezogen auf das Pfropfcopolymer, eines verzweigten Polyamins mit mindestens 4 Stickstoffatomen und einem zahlenmittleren Molekulargewicht Mₙ von mindestens 146 g/mol sowie
b) polyamidbildende Monomere, ausgewählt aus Lactamen, ω-Aminocarbonsäuren und/oder äquimolaren Kombinationen von Diamin und Dicarbonsäure,
wobei die Summe der Gew.-Teile von I. und II. 100 ergibt.

2. Formmasse gemäß Anspruch 1,
**dadurch gekennzeichnet,**
**daß** sie
I. 75 bis 98 Gew.-Teile des transparenten Polyamids sowie
II. 2 bis 25 Gew.-Teile des Pfropfcopolymers enthält.

3. Formmasse gemäß einem der vorhergehenden Ansprüche,
**dadurch gekennzeichnet,**
**daß** sie
I. 85 bis 97 Gew.-Teile des transparenten Polyamids sowie
II. 3 bis 15 Gew.-Teile des Pfropfcopolymers enthält.

4. Formmasse gemäß einem der vorhergehenden Ansprüche,
**dadurch gekennzeichnet,**
**daß** das Pfropfcopolymer unter Verwendung von 1 bis 20 Gew.-% eines verzweigten Polyamins hergestellt ist.

5. Formmasse gemäß einem der vorhergehenden Ansprüche,
**dadurch gekennzeichnet,**
**daß** das Pfropfcopolymer unter Verwendung von 1,5 bis 16 Gew.-% eines verzweigten Polyamins hergestellt ist.

6. Formmasse gemäß einem der vorhergehenden Ansprüche,
**dadurch gekennzeichnet,**
**daß** das verzweigte Polyamin mindestens 8 Stickstoffatome besitzt.

7. Formmasse gemäß einem der vorgerhenden Ansprüche,
**dadurch gekennzeichnet,**
**daß** das verzweigte Polyamin mindestens 11 Stickstoffatome besitzt.

8. Formmasse gemäß einem der vorhergehenden Ansprüche,
**dadurch gekennzeichnet,**
**daß** das verzweigte Polyamin ein zahlenmittleres Molekulargewicht von mindestens 500 g/mol besitzt.

9. Formmasse gemäß einem der vorhergehenden Ansprüche,
**dadurch gekennzeichnet,**
**daß** das transparente Polyamid ausgewählt ist aus
- dem Polyamid aus Terephthalsäure und dem Isomerengemisch aus 2.2.4-und 2.4.4-Trimethylhexamethylendiamin,
- dem Polyamid aus Isophthalsäure und 1.6-Hexamethylendiamin,
- dem Copolyamid aus einem Gemisch aus Terephthalsäure/Isophthalsäure und 1.6-Hexamethylendiamin,
- dem Copolyamid aus Isophthalsäure, 3.3'-Dimethyl-4.4'diaminodicyclohexylmethan und Laurinlactam oder Caprolactam,
- dem (Co)Polyamid aus 1.12-Dodecandisäure, 3.3'.Dimethyl-4.4'diaminodicyclohexylmethan und gegebenenfalls Laurinlactam oder Caprolactam,
- dem Copolyamid aus Isophthalsäure, 4.4'-Diaminodicyclohexylmethan und Laurinlactam oder Caprolactam,
- dem Polyamid aus 1.12-Dodecandisäure und 4.4'-Diaminodicyclohexylmethan
- dem Copolyamid aus einem Terephthalsäure/Isophthalsäure-Gemisch, 3.3'-Dimethyl-4.4'-diaminodicyclohexylmethan und Laurinlactam.

10. Formmasse gemäß einem der vorhergehenden Ansprüche,
**dadurch gekennzeichnet,**
**daß** das Polyamin ausgewählt ist aus der Gruppe
- Dendrimere und
- verzweigte Polyethylenimine.

11. Formmasse gemäß einem der vorhergehenden Ansprüche,
**dadurch gekennzeichnet,**
**daß** das Pfropfcopolymer zusätzlich unter Verwendung einer Oligocarbonsäure hergestellt wird, die ausgewählt ist aus 0,015 bis etwa 3 Mol-% Dicarbonsäure und 0,01 bis etwa 1,2 Mol-% Tricarbonsäure, jeweils bezogen auf die Summe der übrigen polyamidbildenden Monomere.

12. Formmasse gemäß einem der vorhergehenden Ansprüche,
**dadurch gekennzeichnet,**
**daß** das Pfropfcopolymer zusätzlich unter Verwendung einer Monocarbonsäure mit 3 bis 50 Kohlenstoffatomen als Regler hergestellt wird.

13. Formteil, hergestellt aus der Formmasse gemäß einem der vorhergehenden Ansprüche.

## Claims

1. A moulding composition which comprises the following components:
I. from 50 to 99 parts by weight of a transparent polyamide, and
II. from 1 to 50 parts by weight of a graft copolymer prepared using the following monomers:
a) from 0.5 to 25% by weight, based on the graft copolymer, of a branched polyamine having at least 4 nitrogen atoms and having a number average molecular weight Mₙ of at least 146 g/mol and
b) polyamide-forming monomers selected from lactams, ω-aminocarboxylic acids and/or equimolar combinations of a diamine and a dicarboxylic acid,
where the sum of the parts by weight of I. and II. gives 100.

2. A moulding composition according to claim 1, **characterized in that** it comprises
I. from 75 to 98 parts by weight of the transparent polyamide
and
II. from 2 to 25 parts by weight of the graft copolymer.

3. A moulding composition according to one of the preceding claims, **characterized in that** it comprises
I. from 85 to 97 parts by weight of the transparent polyamide
and
II. from 3 to 15 parts by weight of the graft copolymer.

4. A moulding composition according to any one of the preceding claims, **characterized in that** the graft copolymer has been prepared using from 1 to 20% by weight of a branched polyamine.

5. A moulding composition according to any one of the preceding claims, **characterized in that** the graft copolymer has been prepared using from 1.5 to 16% by weight of a branched polyamine.

6. A moulding composition according to any one of the preceding claims, **characterized in that** the branched polyamine has at least 8 nitrogen atoms.

7. A moulding composition according to any one of the preceding claims, **characterized in that** the branched polyamine has at least 11 nitrogen atoms.

8. A moulding composition according to any one of the preceding claims, **characterized in that** the branched polyamine has a number average molecular weight of at least 500 g/mol.

9. A moulding composition according to any one of the preceding claims, **characterized in that** the transparent polyamide is selected from
- the polyamide made from terephthalic acid and the isomer mixture of 2,2,4- and 2,4,4-trimethylhexamethylenediamine,
- the polyamide made from isophthalic acid and 1,6-hexamethylenediamine,
- the copolyamide made from a mixture of terephthalic acid/isophthalic acid and 1,6-hexamethylenediamine,
- the copolyamide made from isophthalic acid, 3,3'-dimethyl-4,4'-diaminodicyclohexylmethane and laurolactam or caprolactam,
- the (co)polyamide made from 1,12-dodecanedioic acid, 3,3'-dimethyl-4,4'-diaminodicyclohexylmethane and, if desired, laurolactam or caprolactam,
- the copolyamide made from isophthalic acid, 4,4'-diaminodicyclohexylmethane and laurolactam or caprolactam,
- the polyamide made from 1,12-dodecanedioic acid and 4,4'-diaminodicyclohexylmethane,
- the copolyamide made from a terephthalic acid/isophthalic acid mixture, 3,3'-dimethyl-4,4'-diaminodicyclohexylmethane and laurolactam.

10. A moulding composition according to any one of the preceding claims, **characterized in that** the polyamine is selected from the group consisting of
- dendrimers and
- branched polyethyleneimines.

11. A moulding composition according to any one of the preceding claims, **characterized in that** the graft copolymer is prepared with the additional use of an oligocarboxylic acid selected from 0.015 to about 3 mol% of dicarboxylic acid and 0.01 to about 1.2 mol% of tricarboxylic acid, in each case based on the sum of the other polyamide-forming monomers.

12. A moulding composition according to any one of the preceding claims, **characterized in that** the graft copolymer is prepared with the additional use of a monocarboxylic acid having 3 to 50 carbon atoms as regulator.

13. A moulding produced from a moulding composition according to any one of the preceding claims.

## Revendications

1. Masse à mouler qui contient les composants suivants :
I. 50 à 99 parties en poids d'un polyamide transparent ainsi que
II. 1 à 50 parties en poids d'un copolymère greffé, qui est produit en utilisant les monomères suivants :
a) 0,5 à 25 % en poids, par rapport au copolymère greffé, d'une polyamine ramifiée comportant au moins 4 atomes d'azote et présentant un poids moléculaire moyen en nombre Mₙ d'au moins 146 g/mole ainsi que
b) des monomères formateurs de polyamide, choisis parmi les lactames, les acides ω-aminocarboxyliques et/ou des combinaisons équimolaires de diamine et d'acide dicarboxylique,
la somme des parties en poids de I. et de II. étant égale à 100.

2. Masse à mouler selon la revendication 1,
**caractérisée en ce qu'**
elle contient
I. de 75 à 98 parties en poids du polyamide transparent
ainsi que
II. de 2 à 25 parties en poids du copolymère greffé.

3. Masse à mouler selon l'une des revendications précédentes,
**caractérisée en ce qu'**
elle contient
I. de 85 à 97 % en poids du polyamide transparent, ainsi que
II. de 3 à 15 % en poids du copolymère greffé.

4. Masse à mouler selon l'une des revendications précédentes,
**caractérisée en ce que**
le copolymère greffé est produit en utilisant de 1 à 20 % en poids d'une polyamine ramifiée.

5. Masse à mouler selon l'une des revendications précédentes,
**caractérisée en ce que**
le copolymère greffé est produit en utilisant de 1,5 % à 16 % en poids d'une polyamine ramifiée.

6. Masse à mouler selon l'une des revendications précédentes,
**caractérisée en ce que**
la polyamine ramifiée possède au moins 8 atomes d'azote.

7. Masse à mouler selon l'une des revendications précédentes,
**caractérisée en ce que**
la polyamine ramifiée possède au moins 11 atomes d'azote.

8. Masse à mouler selon l'une des revendications précédentes,
**caractérisée en ce que**
la polyamine ramifiée possède un poids moléculaire moyen en nombre d'au moins 500 g/mole.

9. Masse à mouler selon l'une des revendications précédentes,
**caractérisée en ce que**
le polyamide transparent est choisi parmi
- le polyamide de l'acide téréphtalique et du mélange d'isomères de 2.2.4- et de 2.4.4-triméthylhexaméthylènediamine,
- le polyamide de l'acide isophtalique et de la 1.6-hexaméthylènediamine,
- le copolyamide provenant d'un mélange d'acide téréphtalique/acide isophtalique et de 1.6-hexaméthylènediamine,
- le copolyamide de l'acide isophtalique, du 3.3'-diméthyl-4.4'-diaminodicyclohexylméthane et du laurine lactame ou du caprolactame,
- le (co)polyamide de l'acide 1.12-dodécanedioïque, du 3.3'-diméthyl-4.4'-diaminodicyclohexylméthane et le cas échéant du laurine lactame ou du caprolactame,
- le copolyamide de l'acide isophtalique, du 4.4'-diaminodicyclohexylméthane et du laurine lactame ou du caprolactame,
- le polyamide de l'acide 1.12-dodécanedioïque et du 4,4'-diaminodicyclohexylméthane,
- le copolyamide d'un mélange d'acide téréphtalique/acide isophtalique, de 3.3'-diméthyl-4.4'-diaminodicyclohexylméthane et de laurine lactame.

10. Masse à mouler selon l'une des revendications précédentes,
**caractérisée en ce que**
la polyamine est choisie dans le groupe constitué par
- les dendrimères et
- les polyéthylèneimines ramifiées.

11. Masse à mouler selon l'une des revendications précédentes,
**caractérisée en ce que**
le copolymère greffé est produit en outre en utilisant un acide oligocarboxylique qui est choisi à partir d'environ 0,015 à environ 3 % molaire d'acide dicarboxylique et de 0,01 à environ 1,2 % molaire d'acide tricarboxylique, toujours par rapport à la somme des autres monomères formateurs de polyamides.

12. Masse à mouler selon l'une des revendications précédentes,
**caractérisée en ce que**
le copolymère greffé est produit en outre en utilisant un acide monocarboxylique comportant de 3 à 50 atomes de carbone comme régulateur.

13. Article moulé fabriqué à partir de la masse à mouler selon l'une des revendications précédentes.
